Europäisches Patentamt

European Patent Office

Office européen des brevets

(19)

(11) **EP 0 782 544 B1**

(12) **FASCICULE DE BREVET EUROPEEN**

(45) Date de publication et mention
de la délivrance du brevet:
**29.08.2001 Bulletin 2001/35**

(21) Numéro de dépôt: **96925792.2**

(22) Date de dépôt: **16.07.1996**

(51) Int Cl.$^7$: **C01F 7/47**, C01F 7/06

(86) Numéro de dépôt international:
**PCT/FR96/01104**

(87) Numéro de publication internationale:
**WO 97/03924 (06.02.1997 Gazette 1997/07)**

(54) **PROCEDE D'EPURATION DES SOLUTIONS D'ALUMINATE DE SODIUM CONTENANT DE L'OXALATE DE SODIUM**

FLÜSSIGE REINIGUNGSZUSAMMENSETZUNG

METHOD FOR PURIFYING SODIUM ALUMINATE SOLUTIONS CONTAINING SODIUM OXALATE

(84) Etats contractants désignés:
**DE ES FR GR IE IT**

(30) Priorité: **20.07.1995 FR 9509040**

(43) Date de publication de la demande:
**09.07.1997 Bulletin 1997/28**

(73) Titulaire: **ALUMINIUM PECHINEY**
**75218 Paris Cedex 16 (FR)**

(72) Inventeur: **SOIRAT, Arnaud**
**F-13100 Aix-en-Provence (FR)**

(74) Mandataire: **Mougeot, Jean-Claude et al**
**PECHINEY**
**Immeuble "SIS"**
**217 ,cours Lafayette**
**69451 Lyon Cedex 06 (FR)**

(56) Documents cités:
**EP-A- 0 013 407        EP-A- 0 092 028**
**EP-A- 0 555 163        US-A- 4 915 930**

- **CHEMICAL ABSTRACTS, vol. 69, no. 2, 8 Juillet 1968 Columbus, Ohio, US; abstract no. 4054t, L.G. ROMANOV ET AL.: "Purifying aluminate solutions." page 398; XP002005117 & SU,A,207 884 29 Décembre 1967**
- **LIGHT METALS 1983, CONFERENCE PROCEEDINGS, 6 Mars 1983, WARRENDALE (USA), pages 275-293, XP002005116 S.C. LIBBY: "The effect of Lime/limestone charactzerisitcs on caustization."**

EP 0 782 544 B1

Printed by Jouve, 75001 PARIS (FR)

**Description**

DOMAINE TECHNIQUE

L'invention concerne un procédé d'épuration des solutions d'aluminate de sodium résultant de l'attaque alcaline des bauxites selon le procédé Bayer et contenant de l'oxalate de sodium.

ETAT DE LA TECHNIQUE

Le procédé Bayer, largement décrit dans la littérature spécialisée, constitue la technique essentielle de production de l'alumine destinée à être transformée en aluminium par électrolyse ignée. Selon ce procédé, le minerai de bauxite est traité à chaud au moyen d'une solution aqueuse d'hydroxyde de sodium, à concentration appropriée, provoquant ainsi la solubilisation de l'alumine et l'obtention d'une solution sursaturée d'aluminate de sodium. Après séparation de la phase solide constituant le résidu inattaqué (boues rouges) du minerai, la solution sursaturée d'aluminate de sodium, appelée aussi liqueur Bayer, est décomposée par ensemencement avec des particules de trihydroxyde d'aluminium dans le but de provoquer la précipitation sous forme de trihydroxyde d'aluminium de l'aluminium en solution. La solution d'aluminate de sodium appauvrie en alumine est alors recyclée à l'étape de l'attaque après avoir été concentrée et rechargée en hydroxyde de sodium, ou soude caustique, pour rétablir la concentration appropriée à l'attaque du minerai.

En même temps que l'alumine de la bauxite est dissoute à l'état d'aluminate de sodium, la solution d'aluminate de sodium sursaturée issue de l'attaque se charge progressivement de composés organiques produits de la dégradation plus ou moins complète des matières organiques contenues dans le minerai. Ces composés organiques, dégradés sous forme de sels organiques de sodium et principalement sous forme d'oxalate de sodium, s'avèrent très gênants. Outre le fait qu'ils colorent les solutions d'aluminate de sodium et le trihydrate d'aluminium, les oxalates par accumulation atteignent rapidement leur seuil critique de concentration et précipitent sous forme de fines aiguilles sur l'amorce d'hydroxyde d'aluminium. Ces fines aiguilles d'oxalate de sodium agissent alors comme de véritables germes pour la précipitation de l'hydroxyde d'aluminium en provoquant une augmentation du nombre des fines particules qui deviennent trop nombreuses pour être efficacement contrôlées pendant la décomposition de l'aluminate de sodium.

Ainsi, la précipitation de l'oxalate de sodium affecte la qualité du trihydroxyde d'aluminium précipité et conduit notamment à de grandes variations de la granulométrie de l'alumine produite ainsi qu'à une fragilisation des grains qui constituent des inconvénients majeurs voire rédhibitoires pour l'utilisation de cette alumine dans la production de l'aluminium par électrolyse.

Dès lors, il se révèle nécessaire dans les opérations industrielles de production de l'alumine, de contrôler ou mieux d'éviter la contamination de l'amorce de trihydroxyde d'aluminium pendant l'étape de décomposition par de l'oxalate de sodium précipité.

De nombreux procédés ont été proposés pour limiter la présence d'oxalate de sodium en solution dans les liqueurs Bayer.

Ainsi on a expérimenté des procédés visant à détruire ou décomposer directement les matières humiques contenues dans le minerai, par exemple par grillage, mais ils sont peu utilisés industriellement en raison de leur coût prohibitif.

Plus connus sont les procédés qui consistent à agir sur les produits de décomposition de la liqueur sursaturée par lavage du trihydroxyde d'aluminium destiné à la production ou d'une partie du trihydroxyde d'aluminium recyclé comme amorce à l'étape de décomposition. On élimine ainsi sélectivement l'oxalate de sodium dilué dans les eaux de lavage par précipitation à la chaux et formation de l'oxalate de calcium. Toutefois, de tels procédés ne permettent pas de conduire l'étape de précipitation du trihydroxyde d'aluminium dans les meilleures conditions de productivité. Par ailleurs, une contamination trop importante par dépôt d'oxalate sur les grains de trihydroxyde d'aluminium peut provoquer une fragilisation de ces grains au stade de la calcination résultant de la décomposition thermique de l'oxalate emprisonné dans l'édifice cristallin.

Pour éviter ces inconvénients, plusieurs procédés préconisent de limiter la concentration en oxalate de sodium au cours de la décomposition de la liqueur d'aluminate de sodium, à une valeur inférieure à sa concentration critique de précipitation et cela sans réduire de façon rédhibitoire le taux de matières organiques et notamment de matières humiques en solution dont l'effet stabilisant sur la liqueur est maintenant bien connu par le fait qu'il permet de régler le seuil critique de concentration de l'oxalate de sodium en solution. Dans ce but, on effectue sur au moins une fraction de la liqueur d'aluminate de sodium issue de décomposition, mais déjà sursaturée en oxalate de sodium, une déstabilisation de la concentration pour précipiter et séparer spécifiquement l'oxalate de sodium de la liqueur alors désaturée.

Ainsi, le procédé décrit dans le brevet US 3899571 (EP-A-0013407) consiste à traiter une liqueur Bayer sursaturée par rapport à la solubilité à l'équilibre d'oxalate de sodium (telles que les liqueurs appauvries en aluminate de sodium issues de la décomposition, reconcentrées ou non) par introduction d'une amorce d'oxalate de sodium recyclée, pour provoquer la précipitation de l'oxalate de sodium en solution et aboutir à la concentration de l'équilibre de solubilité de l'oxalate de sodium. Après une séparation solide-liquide facilitée par l'emploi d'un adjuvant de filtration, la liqueur épurée est alors réintroduite dans le cycle Bayer tandis qu'une fraction de la phase solide d'oxalate de sodium est utilisée pour la préparation de la suspension de cristaux d'amorce, l'autre fraction étant éliminée du cycle.

Bien que ce procédé d'amorçage s'avère efficace pour provoquer la précipitation de l'oxalate de sodium, il présente des inconvénients lors de son application industrielle. En effet, les cristaux d'oxalate de sodium constituant l'amorce deviennent assez rapidement inactifs par empoisonnement de leur surface par les matières organiques présentes et il convient alors de procéder à un lavage de cette amorce dont la réalisation est très délicate. Dans le cas où le lavage se révèle insuffisant, il apparait une baisse d'activité de l'amorce et dès lors une diminution du rendement de précipitation de l'oxalate de sodium. Dans le cas où le lavage est trop poussé, il se produit une solubilisation partielle et un affinement granulométrique de l'amorce, qui conduit à des séparations liquide-solide très difficiles et dès lors à des baisses de rendement de purification.

Au lieu de réaliser la déstabilisation de la liqueur Bayer sursaturée en oxalate de sodium par une amorce d'oxalate de sodium le brevet US 4597952 (EP-A-0173630) préconise l'emploi d'amorces d'oxalate de calcium ou d'oxalate de baryum dont le mode d'action conduit indirectement au même résultat. En effet, l'oxalate de calcium et l'oxalate de baryum, instables dans la liqueur Bayer fortement alcaline, libèrent l'ion oxalate pour former de l'oxalate de sodium qui contribue à augmenter la concentration de l'oxalate de sodium en solution au-delà du seuil critique de concentration, provoquant ainsi la précipitation de l'oxalate de sodium. La teneur en oxalate dissous est ainsi ramenée à la limite de solubilité de l'oxalate dans les conditions de l'expérimentation, fonction notamment de la température et de la concentration en soude caustique de liqueur. Dans ce procédé, on ne peut éviter la formation de précipités d'oxalate de sodium finement dispersés dans la liqueur Bayer et donc difficiles à séparer par décantation et/ou filtration sans l'aide d'adjuvants. De plus le recyclage d'amorce est nécessaire et une partie de l'oxalate de sodium précipité doit donc être recyclé pour regénérer l'amorce d'oxalate de calcium ou de baryum après élimination des matières organiques entraînées.

Dans le but de s'affranchir du double problème de la séparation des fins précipités d'oxalate de sodium dans la liqueur d'aluminate de sodium et du recyclage des amorces d'oxalate dont la régénération est assez difficile, la demanderesse a mis au point un procédé (FR-A-2686872 = EP-A-0555163) consistant à provoquer la déstabilisation de l'oxalate de sodium dans la solution d'aluminate de sodium non pas à partir d'une amorce à base d'oxalate mais à partir d'une amorce à base de chaux finement divisée donc de nature hétérogène dans le milieu oxalate.

Cette nouvelle amorce, d'un coût peu élevé, permet de précipiter aussi efficacement l'oxalate de sodium sous forme d'un gâteau aisément séparable par filtration sans apport d'adjuvant de filtration. D'autre part, une fois polluée par l'oxalate de sodium et les sels organiques précipités, l'amorce d'un faible coût peut être directement éliminée et mise en décharge au lieu d'être régénérée et recyclée.

Si ce procédé s'est avéré particulièrement adapté pour le traitement de volumes relativement faibles de liqueur chargées en oxalate de sodium, il présente des inconvénients dans les installations de forte capacité traitant des bauxites à trihydrate ou des bauxites mixtes riches en matières organiques notamment d'origine africaine ou indienne. Dans ce cas, en effet, les matières organiques dégradées, en particulier sous forme d'oxalate de sodium, nécessitent la mise en oeuvre de fréquentes opérations de désoxalatation conduisant indirectement à une majoration des coûts de production du trihydroxyde d'aluminium et cela pour 2 raisons essentielles:

- L'augmentation de consommation de chaux comme amorce est telle que son coût ne peut plus être négligé et cela d'autant plus que pour améliorer la cinétique de précipitation de l'oxalate en vue de réduire les temps de séjour, il faut accroître la quantité d'amorce.
- Même dans les conditions préconisées de température et de concentration en soude libre et alumine solubilisée de la liqueur Bayer, une petite quantité de l'alumine en solution se combine avec la chaux pour former de l'aluminate tricalcique insoluble qui lors de la séparation solide-liquide est retenu puis éliminé avec le précipité d'oxalate et l'amorce, engendrant une perte supplémentaire d'alumine.

## PROBLEME POSE

Un procédé d'élimination de l'oxalate de sodium dans les liqueurs Bayer reste à trouver qui présente à la fois la bonne sélectivité des procédés mettant en oeuvre un agent de déstabilisation à base d'oxalate selon US 3899571 ou US 4597952 et la simplicité, en terme notamment de filtrabilité, des procédés mettant en oeuvre une amorce à base de chaux comme agent de déstabilisation. Cela, sans leurs inconvénients respectifs à savoir pour les premiers une régénération difficile des amorces en vue de leur recyclage et pour les seconds des pertes en matières premières avec l'amorce non recyclée et l'alumine combinée.

## OBJET DE L'INVENTION

Le procédé mis au point par la demanderesse permet de satisfaire à ces conditions et il repose sur le constat que l'on peut mettre en oeuvre efficacement comme agent de déstabilisation de l'état de sursaturation de l'oxalate de sodium des amorces hétérogènes qui, à la différence de la chaux sont quasiment inertes chimiquement vis à vis du milieu réactionnel et recyclables sans altération notable de leur activité qui est périodiquement contrôlée; lesdites amorces hétérogènes étant d'ailleurs au moins partiellement régénérables par simple lavage ou par calcination.

Plus précisément l'invention concerne un procédé d'épuration des solutions d'aluminate de sodium résultant de l'attaque alcaline des bauxites selon le procédé Bayer et contenant de l'oxalate de sodium, ledit procédé comportant :

- la précipitation de l'oxalate de sodium dissous dans au moins une fraction de la solution d'aluminate de sodium préalablement décomposée, éventuellement concentrée avant recyclage comme liqueur d'attaque, au moyen d'un agent de déstabilisation de l'état de sursaturation de l'oxalate de sodium ou amorce de désoxalatation,
- la séparation de l'oxalate précipité avec l'agent de déstabilisation sous forme d'un résidu insoluble et de la solution d'aluminate de sodium épurée qui est recyclée comme liqueur d'attaque,

caractérisé en ce que l'agent de déstabilisation, ou amorce de désoxalatation, mis en contact avec la solution d'aluminate de sodium est un sel autre qu'un oxalate, un oxyde métallique, un hydroxyde métallique ou leur mélange, ledit agent de déstabilisation restant essentiellement insoluble et inerte chimiquement vis à vis du milieu réactionnel, et en ce qu'après régénération et mélange avec une aliquote de ladite solution d'aluminate de sodium à épurer, il est recyclé en tant qu'amorce en tête du procédé de désoxalatation.

Le sel autre qu'un oxalate, le plus souvent utilisé comme agent de déstabilisation, est choisi de préférence dans le groupe des aluminates de calcium, tel l'aluminate tricalcique hexahydraté, $Al_2O_3.3CaO.6H_2O$, appelé aussi ATC6.

L'oxyde métallique, le plus souvent utilisé comme agent de déstabilisation, est choisi de préférence dans le groupe des oxydes de fer ou des oxydes d'aluminium tels l'alumine calcinée de type alpha, ou alpha+béta, l'alumine de transition ainsi que les produits intermédiaires formés par le mélange de ces alumines.

L'hydroxyde métallique, le plus souvent utilisé comme agent de déstabilisation, est choisi de préférence dans le groupe des hydroxydes de fer ou des hydroxydes d'aluminium tels le trihydroxyde d'aluminium ou trihydrate d'alumine $Al_2O_3\, 3H_2O$, le monohydroxyde d'aluminium ou monohydrate d'alumine $Al_2O_3\, H_2O$.

Il s'est avéré en effet de façon surprenante que les agents de déstabilisation selon l'invention, et plus particulièrement l'aluminate tricalcique hexahydraté, peuvent se substituer avantageusement comme agent de déstabilisation de l'état de concentration de l'oxalate de sodium, aux amorces d'oxalates de sodium, baryum ou calcium mais aussi aux amorces de chaux préconisées par l'art antérieur. En respectant des conditions opératoires bien définies, notamment en ce qui concerne la température et la concentration en soude dans la solution d'aluminate de sodium, il est possible en effet de précipiter de façon assez sélective l'oxalate de sodium sans entraîner de matières organiques en quantité rédhibitoire.

Ainsi dans la mesure où la solution d'aluminate à épurer atteint une concentration en hydroxyde de sodium ou soude caustique élevée, après décomposition et éventuelle concentration ($Na_2O$ caust > 180 g/l), et pour des températures qui n'excèdent pas 60°C, l'agent de déstabilisation et notamment l'aluminate tricalcique hexahydraté ou $ATC_6$ reste essentiellement inerte chimiquement et insoluble vis à vis de la solution fortement alcaline. Comme amorce de précipitation de l'oxalate en solution sursaturée, l'agent de déstabilisation agit donc essentiellement par effet mécanique de contact liquide/solide, qui dans le cas présent est d'autant plus important qu'il est à l'état finement divisé, c'est-à-dire que sa surface BET est élevée. A noter toutefois qu'au-delà de 60°C cet amorçage de la précipitation relativement sélective de l'oxalate de sodium s'atténue et cela au profit de la précipitation des matières humiques.

Dans la plage de température 40-60°C, après un temps suffisant de mise en contact de l'amorce avec la solution d'aluminate de sodium (au moins 1 heure et de préférence 5 à 40 heures) pour permettre la précipitation et le grossissement des petits cristaux d'oxalate de sodium, on constate que la phase solide, constituée pour l'essentiel de particules d'amorce et d'oxalate de sodium, est aisément séparable de la liqueur par les moyens habituels connus de séparation liquide/solide : filtration, décantation ou centrifugation.

A noter que le seuil critique de concentration à partir duquel l'oxalate de sodium précipite spontanément, décroît avec l'abaissement de la température et qu'à moins de 40°C il faut craindre des précipitations intempestives de très fines particules d'oxalate de sodium dans les circuits, hors des postes prévus à cet effet ; ces très fines particules s'avérant par ailleurs très difficiles à filtrer.

Enfin l'agent de déstabilisation selon l'invention, et notamment l'ATC6, présente l'avantage par rapport aux autres agents de déstabilisation connus d'être très facilement recyclable car il conserve son activité pendant de nombreux cycles sans nécessiter de régénération, celle-ci étant par ailleurs très facile à réaliser quand on enregistre un dépôt excessif d'oxalate de sodium contrôlé par dosage du carbone oxalique ainsi qu'une diminution importante de la surface BET.

En effet, cette régénération peut être simplement obtenue par lavage à l'eau ou par une solution aqueuse alcaline provenant par exemple des eaux de lavage du trihydroxyde d'aluminium précipité à l'étape de décomposition du cycle Bayer ou des boues rouges décantées. Les conditions optimales de régénération de l'amorce sont fonction de la quantité des matières organiques entraînées avec l'oxalate de sodium précipité sur cette amorce. Pour limiter l'importance de cet entraînement, il convient d'effectuer la déstabilisation de la solution d'aluminate de sodium après réglage de sa concentration en soude caustique de préférence entre 190 et 250 g $Na_2O$/litre. Le lavage de l'amorce, alors chargée presque uniquement d'oxalate de sodium cristallisé, est effectué généralement par brassage, ou "patouillage", avec des eaux de lavage provenant d'autres étapes du procédé Bayer comme précédemment indiqué. Afin de limiter la consommation d'eau et d'énergie tout en minimisant les pertes en soude par la désoxalatation, mesurée par le rapport pondéral carbone oxalique/$Na_2O$ total, une partie de l'eau de lavage de l'amorce peut être recyclée. Bien entendu, il convient de maintenir à tout moment un état sous-saturé en oxalate à la température de lavage. Quant à la plage de température la plus adaptée pour les eaux de lavage elle doit être comprise de préférence entre 40°C et 95°C si on recherche un lavage quasi exhaustif de l'amorce, c'est-à-dire sa réactivation complète par dissolution de la quasi totalité de l'oxalate de sodium précipité.

En-dessous de 40°C, la solubilité de l'oxalate de sodium diminue nécessitant une augmentation significative des volumes d'eau de lavage, et au-dessus de 95°C il y a un risque de début de solubilisation de l'amorce et donc de perte si elle est à base d'ATC6. A cet égard, sur l'ensemble de l'installation, la perte d'amorce par suite de fuites, notamment dans les filtrats, est de l'ordre de 3 à 4% en poids de la quantité totale mise en oeuvre au début de chaque opération de désoxalatation. La compensation par un apport équivalent d'amorce vierge est effectuée de préférence à chaque recyclage pour conserver une charge d'amorce constante. Cette quantité totale d'amorce, généralement comprise entre 5 et 100 g par litre de solution d'aluminate de sodium à épurer et de préférence comprise entre 20 et 40 g/litre quand il s'agit d'ATC6, permet d'agir sur la cinétique de précipitation de l'oxalate de sodium et donc sur les temps de séjour amorce/solution supérieurs à 1 heure et de préférence compris entre 5 et 40 heures.

Les amorces utilisées comme agents de déstabilisation selon l'invention sont regénérables totalement ou partiellement par lavage. Parmi les oxydes et hydroxydes métalliques, les alumines calcinées alpha et/ou béta, les alumines de transition, le monohydroxyde et le trihydroxyde d'aluminium sont des amorces facilement regénérables par lavage. Parmi les sels il en est de même avec les aluminates de calcium et notamment l'ATC6.

A noter une possibilité intéressante de valoriser un sous-produit de la fabrication de trihydroxyde d'aluminium selon le procédé Bayer et qui consiste à utiliser comme amorce le gâteau insoluble de filtration, avant décomposition, de la solution sursaturée d'aluminate de sodium issue de décantation. Ce gâteau insoluble est constitué d'une part des fines particules de boues rouges non décantées (hydroxydes de fer, silice, silico-aluminates insolubles...) et d'autre part d'un adjuvant de filtration à base de chaux (chaux vive ou carbonate de calcium) qui au contact de la solution d'aluminate de sodium sursaturée, lors de la filtration, se transforme progressivement en ATC6 de sorte que l'on réalise un mélange synthétique de différents agents de déstabilisation où l'ATC6 est prépondérant.

La plupart de ces amorces, polluées principalement par l'oxalate de sodium précipité, peuvent aussi être facilement regénérées par calcination à plus de 300°C et de préférence entre 400 et 600°C pour décomposer rapidement (1 à 3 heures) l'oxalate de sodium. Ainsi les alumines alpha et /ou bêta, comme la plupart des alumines de transition stables à 600°C, sont régénérées en l'état alors que les hydroxydes d'aluminium au terme de plusieurs cycles de calcination se transforment progressivement en alumine de transition. Après calcination un broyage de l'amorce pouvant se limiter très souvent à une simple désagglomération, est indispensable pour retrouver un état de finesse suffisant.

Il n'est pas recommandé en revanche d'effectuer la régénération par calcination des amorces à base de sels hydratés comme les aluminates de calcium et plus particulièrement l'ATC6 qui, non seulement perd son eau de cristallisation à basse température, mais se dissocie partiellement dès 280°C avec libération de chaux selon la réaction :

$$3CaO.Al_2O_3 \, 6H_2O \longrightarrow l2CaO.7Al_2O_3H_2O + 9Ca(OH)_2 + 32H_2O$$

Le mélange ainsi obtenu ne peut être évidemment pas recyclé comme amorce, n'étant plus chimiquement inerte vis à vis de la liqueur d'aluminate de sodium à traiter.

Dans l'optique d'optimiser les conditions de mise en oeuvre du procédé, il convient enfin de remarquer que l'augmentation de la concentration en soude caustique de la liqueur (concentration soude libre + soude combinée dans $Al_2O_3 \, Na_2$ exprimée en $Na_2O$ g/l) tend à abaisser le seuil critique de concentration en oxalate de sodium. Celui-ci est en fait surtout influencé par la présence de matières organiques peu dégradées dans la liqueur. Ce seuil étant d'autant plus élevé que la liqueur est chargée en matières organiques et notamment en matières humiques, on peut conclure aisément que le procédé selon l'invention sera d'autant plus efficace que ce seuil est élevé et donc que la quantité d'oxalate en mesure de précipiter est grande pour un volume de liqueur déterminé. C'est la raison pour laquelle l'invention trouve une de ses meilleures applications lors du traitement des bauxites tropicales à trihydrate. Ces bauxites à base d'hydragillite et riches en matières organiques, subissent une attaque alcaline à une température généralement $\leq 150°C$ de sorte que la liqueur d'attaque s'enrichit progressivement en oxalate de sodium, conséquence de la dégradation des matières organiques dans le temps. De ce fait la teneur en oxalate de sodium soluble peut atteindre 0,4 à 0,7% en poids de carbone oxalique rapporté à la soude caustique (soude libre + soude à l'état $AlO_2Na$) avant d'être ramenée après précipitation selon le procédé de l'invention à des teneurs de 0,15 à 0,35%. On notera encore que, dans le cas de bauxite à monohydrate contenant peu de matières organiques et de surcroît attaquées à haute température ($\geq 200°C$), le seuil critique de concentration n'excède pas 0,20 à 0,25% en poids de carbone oxalique rapporté à la soude caustique du fait de la présence en quantité très réduite dans la liqueur de matières organiques stabilisantes. Ce seuil peut être artificiellement relevé jusqu'à 0,4 ou 0,5% par ajout dans la liqueur, en un point quelconque du cycle Bayer, d'un polyélectrolyte anionique de synthèse tels que polyacrylamide, acide polyacrylique, conformément à l'enseignement du brevet EP 0173630 (US 4597952) au nom de la demanderesse. L'action retardatrice de la précipitation de l'oxalate de sodium par cet agent de synthèse, qui est similaire à celle des matières organiques ou organiques peu dégradées naturellement présentes dans la liqueur Bayer, permet d'appliquer le procédé de la présente invention à toutes les bauxites avec la même efficacité que pour les bauxites tropicales à trihydrate.

## MISE EN OEUVRE DE L'INVENTION

La réalisation de l'invention sera mieux comprise à partir de la description basée :

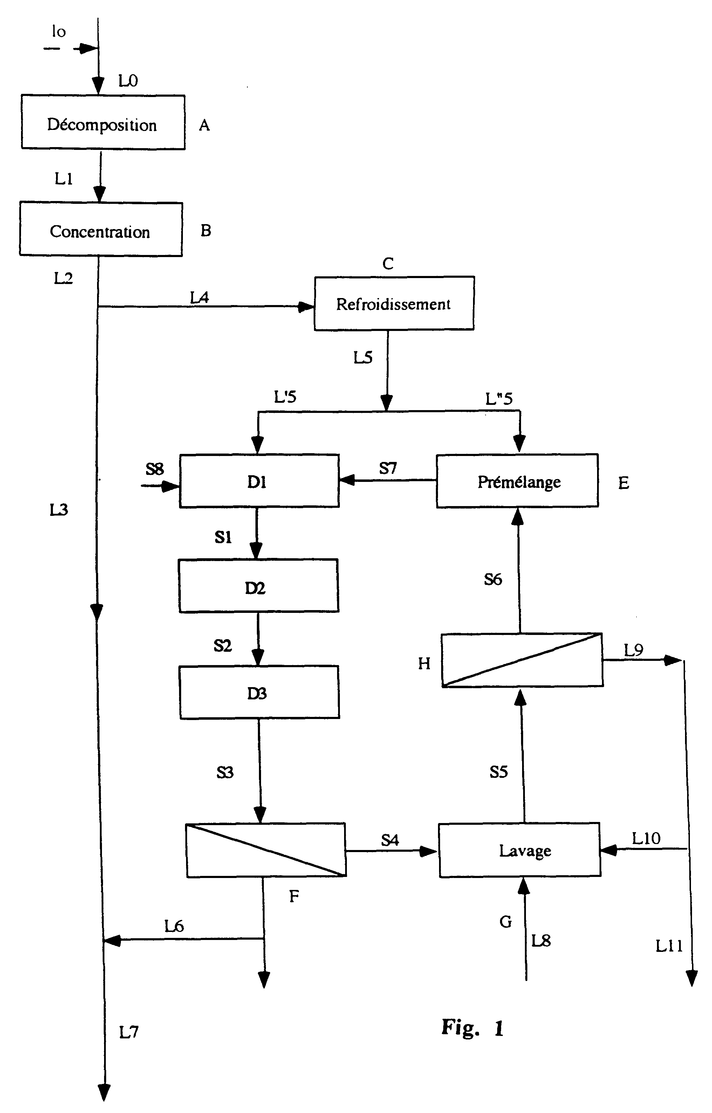

- sur le schéma général de traitement (figure 1) comportant, après régénération par lavage, le recyclage d'une amorce à base d'ATC6 utilisée comme agent de déstabilisation.

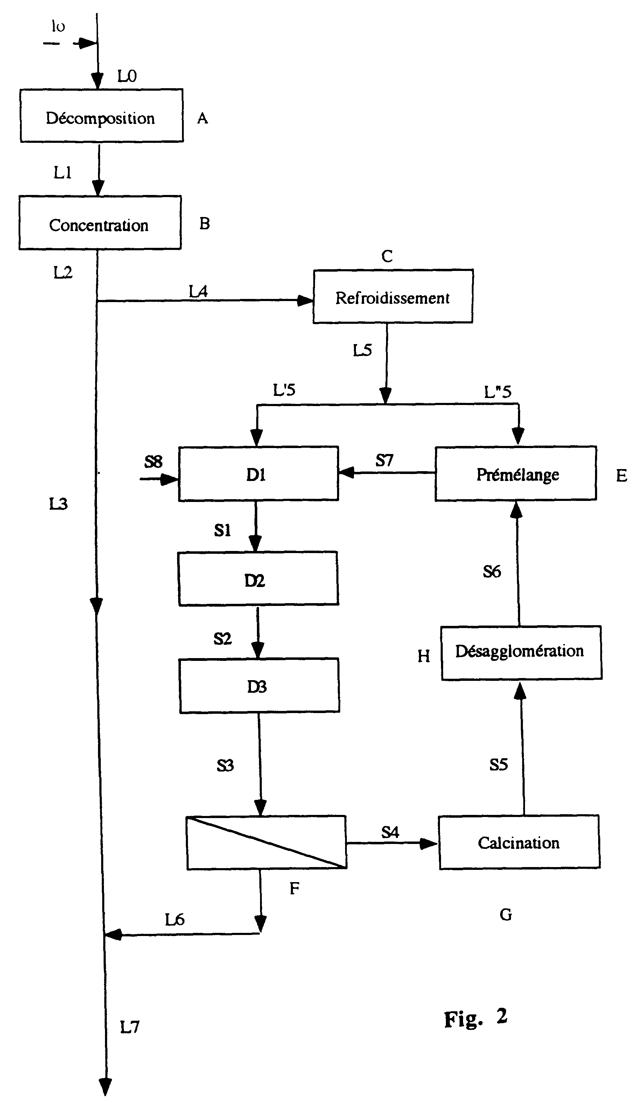

- ou sur le même schéma général (figure 2) comportant, après régénération par calcination, le recyclage d'une amorce à base d'alumine alpha utilisée comme agent de déstabilisation.

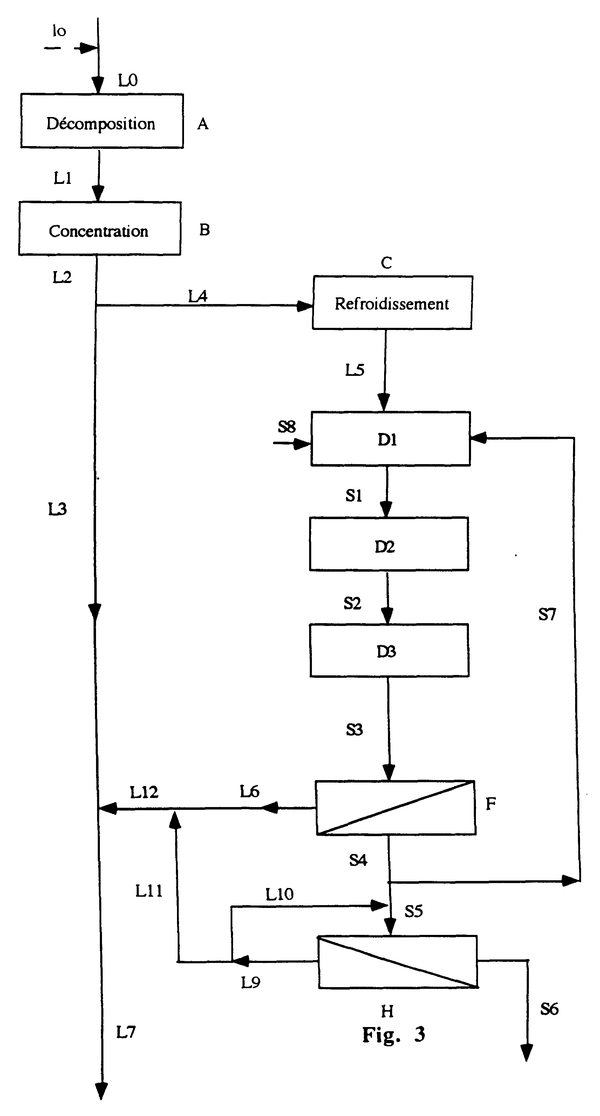

- mais également sur le schéma simplifié (figure 3) comportant le recyclage d'une amorce à base d'ATC6 sans régénération préalable.

Selon la figure 1, la solution sursaturée d'aluminate de sodium Lo ou liqueur Bayer est éventuellement additionnée avant l'étape A de décomposition d'un polyélectrolyte anionique lo, par exemple le FLOERGER (R) type AN 934 SH à raison d'environ 20 mg par litre de solution, pour relever, si nécessaire, au-delà de 0,40% le seuil de concentration critique en oxalate de sodium mesuré par le rapport du carbone oxalique à la soude caustique à savoir C oxg/l/$Na_2O$ caust g/l.

Après décomposition A, réalisée de façon connue en présence d'amorce de trihydroxyde d'aluminium, la liqueur décomposée résultante L1, dont le rapport Rp des concentrations $Al_2O_3$ sol g/l/$Na_2O$ caust g/l est compris de préférence entre 0,55 et 0,65 et la concentration en soude caustique est comprise de préférence entre 140 et 160 g $Na_2O$/litre, est concentrée à l'étape B et la liqueur résultante L2, dont la teneur en soude caustique est au moins égale à 180 g $Na_2O$/litre et de préférence comprise entre 190 et 250 g $Na_2O$/litre. Elle est séparée ensuite en 2 fractions, une fraction principale L3 représentant plus de 90% du volume L2 qui après mélange L7 avec de la liqueur L6 déjà désoxalatée est recyclée en tête de procédé au poste d'attaque (non représentée) du minerai, et une fraction mineure L4, représentant moins de 10% et de préférence 4 à 8% du volume de liqueur L2, destinée à subir une désoxalatation selon le procédé de l'invention. L'importance de la fraction L4 prélevée est évidemment fonction de la quantité d'oxalate de sodium qu'il faut éliminer à chaque cycle pour éviter un enrichissement progressif de la liqueur Bayer en oxalate de sodium et donc tout risque de précipitation intempestive de cet oxalate sur les grains de trihydroxyde d'aluminium lors de la décomposition.

La liqueur L4 résultante est refroidie C entre 40 et 60°C de sorte que sous l'effet conjuguée de la très forte concentration en soude et de l'abaissement de température la liqueur L5 refroidie, étant proche de son seuil de concentration critique en oxalate de sodium, peut être alors facilement déstabilisée. Une fraction principale L'5 représentant plus de 90% du volume L5 est envoyée directement dans un premier réacteur agité D1 pour être mise en contact avec une suspension S7 formée par le mélange E de l'amorce lavée S6 à base d'ATC6 avec la fraction L"5 mineure (moins de 10%) du volume L5 de liqueur concentrée refroidie. La suspension S1 ainsi formée est transférée dans un second réacteur agité D2 pour former la suspension S2, à son tour transférée dans un 3ème réacteur agitée D3. Le temps total de mise en contact amorce à base ATC6 - liqueur, réalisée dans le cas présent dans 3 réacteurs, en cascade est fonction notamment de la quantité d'amorce. Pour des concentrations d'amorce comprise entre 20 et 40 g d'ATC6 par litre le temps de séjour total est généralement compris entre 5 et 40 heures.

L'apport d'amorce à base d'ATC6 pour compenser les pertes de l'ordre de 3 à 4% du poids total d'amorce à chaque cycle est effectué directement dans un des réacteurs de préférence dans le premier réacteur D1 sous forme d'ATC6 préparé indépendemment ou sous forme de chaux vive qui "in situ" se transforme progressivement en ATC6.

A partir de la suspension S3 issue du réacteur D3 la liqueur désoxalatée L6 est séparée par filtration F sous pression, ou par centrifugation, du résidu insoluble S4 formé par l'oxalate de sodium précipité avec l'amorce. A noter qu'une faible quantité de matières organiques peut être entraînée lors de cette précipitation. La liqueur L6 en mélange avec L7 est recyclée au poste d'attaque du procédé Bayer alors que le résidu insoluble S4 est soumis à un lavage G réalisé de préférence par "patouillage", dans une eau de lavage. Cette eau de lavage de PH $\geq$ 6 peut être constituée uniquement par un apport extérieur L8 d'eau pure ou d'eau de lavage alcaline récupérée au cours d'une des étapes du cycle Bayer (lavage du trihydrate d'aluminium précipité, lavage à contre courant des boues rouges) pouvant contenir jusqu'à 30 g $Na_2O$/litre. Généralement, le lavage par patouillage comme représenté figure 1 est effectué par un mélange L8 de ces eaux d'apport extérieur avec une petite fraction L10 d'eau de lavage chargée en oxalate qui est recyclée (cette configuration, à condition de maintenir à tout moment un état sous-saturé en oxalate de sodium dans le mélange L8 + L10, permet de limiter la consommation en eau et en thermie. Le choix d'une plage convenable de température pour les eaux de lavage est également importante. La température moyenne lors du lavage par patouillage ne doit pas être inférieure à 40°C pour assurer une dissolution suffisamment complète et rapide de l'oxalate de sodium et des matières organiques déjà partiellement dégradées. Cette même température moyenne ne doit pas être supérieure à 95°C pour éviter tout risque d'un début de redissolution de l'ATC6 mais surtout pour optimiser le bilan thermique de recyclage résultant du mélange d'une amorce chaude recyclée avec une liqueur refroidie. Au terme du lavage G, l'amorce dans la suspension résultante S5 est séparée des eaux de lavage L9 de préférence par filtration H. L'amorce ainsi lavée S6 est mélangée au poste prémélange E avec l'aliquote L"5 de liqueur concentrée refroidie L5 pour former la suspension S7 recyclée comme agent de déstabilisation, alors qu'une petite fraction L10 de l'eau de lavage L9 chargée en oxalate de sodium est réutilisée en mélange avec L8 comme eau de lavage mais que la majeure partie L11 constituant la purge en oxalate est éliminée.

Quant à l'apport d'amorce à base d'ATC6 nécessaire à la réalisation de la charge d'amorce initiale ou simplement à la composition des pertes à chaque cycle, il s'effectue à partir d'ATC6 pulvérulent préparé sur une chaine de fabrication annexe par combinaison de chaux vive avec une aliquote de solution d'aluminate de sodium issue de décomposition dont le rapport Rp des concentrations $Al_2O_3$ sol/$Na_2O$ caust. est inférieur à 1,3 et compris de préférence entre 0,55 et 0,65 et la concentration en soude caustique est de préférence comprise entre 140 et 180g $Na_2O$/litre.

Pour favoriser la réaction de combinaison de la chaux avec l'aluminate selon :

$$Al_2O_3 \ Na_2O + 3CaO + 7H_2O \ ---> \ Al_2O_3, \ 3CaO, \ 6H_2O + 2NaOH$$

on règle la quantité de CaO entre 1/3 et 1/2 de la stoechiométrie. La suspension ainsi formée est maintenue en agitation pendant 24 à 48 heures. La réaction étant exothermique et la liqueur décomposée arrivant à une température comprise entre 50 et 60°C de sorte que la suspension n'a pratiquement pas besoin d'être chauffée pour atteindre la température de réaction de préférence 90 à 100°C. Au bout de 24 heures la réaction est pratiquement stabilisée car la quasi totalité de la chaux est combinée. Après filtration, lavage et séchage entre 70 et 90°C le résidu insoluble à base d'ATC6 a alors la composition pondérale centésimale suivante :

| | |
|---|---|
| $Al_2O_3$, $3CaO$, $6H_2O$ | 98 à 99 % |
| $Ca(OH)_2$ | 0,4 à 1,5 % |
| $CaCo_3$ | 0,4 à 1,5 % |
| $Na_2O$ | 0,05 à 0,3 % |
| autres impuretés | 0,1 à 0,3 %. |

Le diamètre médian D50 de l'ATC6 est généralement compris entre 2 et 15 micromètres et sa surface BET comprise entre 1 et 10 $m^2$/g.

En fait, l'apport d'amorce de déstabilisation peut s'effectuer plus simplement en réalisant cette même réaction "in situ", c'est-à-dire par mise en contact de chaux vive CaO directement avec la fraction de la solution d'aluminate de sodium décomposée, avant ou après concentration, et destinée à subir le traitement de désoxalatation selon l'invention. Si la totalité de la chaux introduite n'est pas complètement transformée en ATC6 au terme du traitement de déstabilisation, l'amorce mixte $Ca(OH)_2$/ATC6, étant intégralement recyclée après régénération éventuelle pour éliminer l'oxalate de sodium précipité, se transforme progressivement en ATC6 lors des cycles successifs.

La variante du procédé selon le schéma général de traitement de la figure 2 réalise le recyclage d'une amorce à base d'alumine alpha après régénération par calcination. Ainsi après avoir obtenu dans les mêmes conditions que précédemment la liqueur L5 refroidie, on met en contact dans un premier réacteur agité D1 une fraction principale L'5 représentant plus de 90% du volume de liqueur L5 avec une suspension S7 formée par le mélange E d'amorce d'alumine alpha désagglomérée S6 après calcination, avec la fraction mineure L"5 (moins de 10% en volume de L5) de liqueur concentrée refroidie. La suspension S1 ainsi formée est transférée dans un second réacteur agité D2 pour former la suspension S2, à son tour transférée dans un 3° réacteur agité D3. Le temps total de mise en contact amorce à base d'alumine alpha/liqueur, réalisée aussi dans le cas présent dans 3 réacteurs en cascade, est fonction notamment de la quantité d'amorce. Pour des concentrations d'amorce comprises entre 5 et 100 g d'alumine alpha par litre le temps de séjour total est compris entre 5 et 40 heures. Ensuite à partir de la suspension S3 issue du réacteur D3 la liqueur désoxalatée L6 est séparée par filtration F sous pression ou centrifugation du résidu insoluble S4 formé par l'oxalate de sodium précipité avec l'amorce. La liqueur L6 en mélange avec L7 est recyclée au poste d'attaque du procédé Bayer alors que le résidu insoluble S4 essoré est calciné entre 400°C et 600°C pendant environ 1 à 3 heures, c'est-à-dire jusqu'à stabilisation de sa perte de poids par départ d'humidité et décomposition d'oxalate de sodium. Le calcinat S5 d'amorce à base d'alumine alpha ainsi régénéré est désaggloméré par broyage pour détruire les gros agglomérats qui se forment par collage des grains d'alumine lors de la calcination. L'amorce S6 ainsi désagglomérée est prédiluée avec l'aliquote L"5 de liqueur concentrée refroidie pour former la suspension S7 recyclée en tête de procédé comme agent de déstabilisation.

Selon cette variante du schéma général où l'on recycle une amorce régénérée après calcination, la perte d'amorce par cycle est également de 3 à 4% en poids de la charge d'amorce initiale et la compensation se fait de préférence dans le réacteur de tête D1 par apport pondéral équivalent d'amorce qui, dans le cas présent, est une alumine calcinée de type alpha (commercialisée sous la référence P 172 par Aluminium Péchiney) dont la surface BET est de 4 m$^2$/g, le diamètre moyen d'agglomérat (D50 laser) est de 75 μm pour une taille moyenne de cristallite de 0,5 μm.

De façon plus générale des alumines calcinées de surface BET comprise entre 1 et 50 m$^2$/g conviennent dans la mesure où elles se trouvent sous forme suffisamment désagglomérées D50 **<** 100 μm.

Quant à la version simplifiée du procédé selon la figure 3, qui ne comporte pas de régénération d'amorce avant recyclage, elle nécessite le remplacement périodique d'une fraction de l'amorce passivée par l'oxalate de sodium précipité et les matières organiques par un apport nouveau d'amorce.

Pour la mise en oeuvre de cette version simplifiée on utilisera de préférence comme amorce l'ATC6 considéré comme l'agent de déstabilisation le plus efficace, ladite version simplifiée s'appliquant de préférence au traitement de désoxalatation des bauxites à faible teneur en matières organiques contenant donc moins de produits de dégradation, oxalate de sodium notamment. Les volumes de liqueur traitée sont généralement plus importants que dans le procédé de base, 10 à 20% du volume de liqueur décomposée et éventuellement concentrée en circulation au lieu de 4 à 8% précédemment et il est alors préférable d'effectuer par décantation la séparation du résidu insoluble, formé par l'oxalate de sodium précipité avec l'amorce, de la solution désoxalatée, d'autant que l'amorce non lavée est toujours difficile à filtrer.

Selon la figure 3 la liqueur L2, après concentration B de la liqueur décomposée L1, issue elle-même de la décomposition de liqueur Bayer sursaturée Lo éventuellemment additionnée d'un polyélectrolyte lo, est séparée en 2 fractions :

- une fraction principale L3 représentant au moins 80% du volume de L2 et qui, après mélange L7 avec de la liqueur L12 déjà désoxalatée est recyclée en tête de procédé au poste d'attaque (non représenté) du minerai.
- une fraction mineure L4, n'excédant pas 20% et de préférence comprise entre 10 et 20% du volume de L2, destinée à subir une désoxalatation selon le procédé simplifié de l'invention.

La fraction L2 est concentrée par évaporation B pour produire une liqueur L5 après refroidissement C de la liqueur L4 entre 40° et 60°C avec une concentration en soude caustique au moins égale à 180g Na$_2$O/litre et de préférence comprise entre 190 et 250g Na$_2$O/litre. Cette liqueur L5 est mise en contact dans un premier réacteur agité D1 avec une suspension épaissie S7 d'amorce non lavée à base d'ATC6 recyclé ainsi qu'avec de l'amorce neuve S8 destinée à compenser les pertes d'amorce, notamment par la purge, qui sont de l'ordre de 10% du poids total d'amorce sèche. Ici encore, l'apport d'amorce est effectué directement sous forme d'ATC6 préparé indépendemment ou sous forme de chaux vive qui se transforme progressivement en ATC6 au contact de la soude libre. La suspension S1 issue du réacteur D1 est traitée comme précédemment dans 2 autres réacteurs D2 et D3 en cascade pour produire une suspension S3 d'amorce chargée en oxalate précipité dans la liqueur désoxalatée. Cette suspension S3 est ensuite soumise à une décantation F pour séparer la liqueur surnageante L6 désoxalatée du résidu insoluble formé par l'amorce polluée S4 en souverse. Une fraction importante, représentant environ 90% en poids, du résidu insoluble S4 est directement recyclée sous forme de suspension très épaisse S7 comme amorce dans le réacteur de tète D1 alors que la fraction restante S5 d'environ 10% est filtrée H pour séparer le résidu insoluble d'amorce polluée S6 qui est éliminé, de la liqueur désoxalatée L9 dont la majeure partie L11 (au moins 80% en volume) rejoint L6 pour former le retour L12 de liqueur désoxalatée dans le circuit de liqueur décomposée et concentrée L3 et reconstituer ainsi la liqueur concentrée épurée d'une partie de l'oxalate ou liqueur d'attaque 17. La fraction mineure L10 représentant 10 à 20% du volume

# EP 0 782 544 B1

de L9 est recyclée à la filtration comme liqueur de dilution de la souverse de décantation S4.

**EXEMPLES D'APPLICATION**

Exemple 1

Selon le procédé de base de l'invention schématisé par la figure 1, on prélève 23 m$^3$ de liqueur L4 dans le circuit de liqueur décomposée L2 dont le volume total est d'environ 500 m$^3$ et qui provient essentiellement de l'attaque alcaline à 105°C d'une bauxite tropicale à trihydrate, ladite liqueur L4 ayant la composition suivante :

| | |
|---|---|
| Na$_2$O caust g/l | 190 |
| Rp | 0,60 |
| Taux C oxalique/Na$_2$O caust | 0,50% |

Après refroidissement à 50°C, une fraction L'5 représentant 90% en volume de la liqueur L5 refroidie est mélangée dans le réacteur agité D1 avec 690 kg d'ATC6 recyclé lavé et prédilué dans les 10% en volume de liqueur L"5 restante. Pour compenser la perte de l'ordre de 4% d'ATC6 du cycle précédent on rajoute 27 kg d'ATC6 nouveau à l'état pulvérulent. On forme aussi une suspension homogène d'amorce de 690 + 27 = 717 kg de matière sèche dans environ 23 m$^3$ de liqueur soit une suspension à 31 g d'amorce/litre après transfert successivement dans 2 réacteurs D2 et D3 en série correspondant à un temps de séjour total de 20 heures à 50°C. La suspension résultante S3 représentant un volume d'environ 24 m$^3$ est ensuite filtrée en moins de 1 heure sur filtre de 30 m$^2$.

Le filtrat L6 de liqueur désoxalatée d'un volume d'environ 23 m$^3$ est mélangé avec la fraction L3 de liqueur non désoxalatée pour former la liqueur d'attaque L7. On constate dans les 23 m$^3$ de liqueur L5 que le taux de carbone oxalique g/l/Na$_2$O caustique g/l (qui était dans la liqueur L5 de 0,50%) est abaissé à 0,25% à volume identique, ce qui correspond à l'élimination de 190 [0,50-0,25] x 2310$^3$/100 = 10930 g de carbone oxalique équivalent à 61 kg d'oxalate de sodium.

Parallèlement après essorage le gâteau insoluble humide S4 d'amorce chargée d'oxalate de sodium cristallisé contenant moins de 3% de soude libre exprimée en Na$_2$O est soumis à un lavage par patouillage dans environ 5 m3 d'eau de lavage à une température de 60°C. L'eau de lavage provient pour 50% de la récupération d'une fraction L8 de l'eau de lavage à contre-courant des boues rouges et pour 50% du recyclage L9 de cette eau de lavage L10 après séparation par filtration H de la suspension S5 issue du lavage (l'autre fraction L11 constituant la purge en oxalate de sodium). Dans ces conditions, la teneur en oxalate de sodium exprimée en carbone oxalique dans les 5 m$^3$ d'eau de lavage est inférieure à 10 g/litre et sa teneur en soude libre n'excède pas 20 à 30g Na$_2$O/litre. Cette eau de lavage étant sous-saturée assure la dissolution complète de l'oxalate de sodium cristallisé sur l'amorce ainsi que des matières organiques plus ou moins dégradées entraînées avec l'oxalate. A noter qu'au bout d'une dizaine de cycles avec l'enrichissement progressif en oxalate de sodium des eaux de lavage L10 ainsi recyclée il convient d'effectuer une purge intégrale de l'oxalate de sodium en rejetant la totalité des eaux de lavage.

Dans ces conditions, l'on peut assurer une régénération complète de l'amorce à base d'ATC6 qui conserve son activité dans le temps. En effet, au bout de 10 cycles similaires, cette même amorce (après compensation poids pour poids des pertes à chaque cycle) réalise sur la même liqueur Bayer des performances de désoxalatation quasiment identiques à celles du 1er cycle précédemment décrit, puisque le taux de carbone oxalique/Na$_2$O caustique initialement de 0,50% dans la liqueur avant déstabilisation est abaissé à 0,27% (0,25% lors du 1er cycle).

Exemple 2

Cet exemple reproduit les conditions de l'exemple 1 dont il se distingue uniquement par le fait que la régénération avant recyclage de l'amorce d'alumine calcinée polluée est effectuée par calcination. Ainsi après essorage, le gâteau insoluble humide S4 formé par l'amorce chargée d'oxalate de sodium précipité et contenant moins de 2% en soude libre exprimée en Na$_2$O est calciné à l'air pendant 2 heures à 500°C jusqu'à stabilisation de la perte totale de poids. Après désagglomération, par exemple par pulvérisation sous jet d'air, on récupère une charge de 694 Kg d'amorce à base d'alumine régénérée reproduisant bien les caractéristiques physico-chimiques des 717 kg d'amorce vierge initiale à savoir :

Alumine calcinée - mélange de phases alpha, chi et delta

S.BET = 30 m$^2$/g et D50 = 70 µm

9

(référence commerciale AR.45 Aluminium Péchiney).

Cette amorce ainsi régénérée est prémélangée avec L"5 comme précédemment pour former une suspension S7 à très haute concentration en matière sèche qui est ensuite diluée en D1 avec l'autre aliquote L'5 avec ajout de 23 kg d'amorce vierge à base d'alumine pour compenser la perte correspondante d'amorce de l'ordre de 3% en poids par cycle.

A noter qu'au bout du 10ème cycle, les performances de désoxalatation de l'amorce étaient pratiquement inchangées puisque le taux de carbone oxalique initial de la liqueur était abaissé de 0,50% à 0,28% au lieu de 0,26% au 1er cycle.

Exemple 3

Cet exemple reproduit les conditions de l'Exemple 1 dont il se distingue uniquement par le fait que la charge d'amorce initiale ainsi que les apports successifs d'amorce pour compenser les pertes au cours de chaque cycle sont constitués par de la chaux vive au lieu d'ATC6. Cette chaux au contact de la liqueur L'5 dans le réacteur D1 agit au même titre que l'ATC6 se comporte comme une amorce hétérogène et agit comme un agent de déstabilisation de la liqueur chargée en oxalate. Au cours de la précipitation de l'oxalate de sodium, dans les conditions expérimentales de l'invention, la chaux se combine avec l'alumine en solution de la liqueur et se transforme progressivement en ATC6 de sorte qu'au bout de 2 ou 3 cycles l'amorce est quasiment constituée uniquement d'ATC6 précipité "in situ".

Pour des concentrations d'amorce comprises entre 9 et 18 g/litre correspondant après transformation "in situ" en ATC6 à environ 20 et 40 g d'ATC6/litre, les temps de contact sont également compris entre 5 et 40 heures pour obtenir une efficacité d'épuration équivalente à celle obtenue avec une amorce exogène d'ATC6 c'est-à-dire qu'après régénération de l'amorce par lavage on conserve à celle-ci une activité constante et par suite une efficacité équivalente mesurée par l'abaissement du taux de carbone oxalique rapporté à la soude caustique exprimée en $Na_2O$ qui passe de 0,50% à environ 0,25% et cela même après une dizaine de cycles.

Exemple 4

On prélève selon le procédé simplifié de l'invention schématisé par la figure 3, environ 72 $m^3$ de liqueur L4 dans le circuit de liqueur décomposée L2 d'un volume total d'environ 500 $m^3$ issue de l'attaque à 250°C d'une bauxite à monohydrate d'origine méditerranéenne donc peu chargée en matières organiques. A noter que le seuil de concentration critique en oxalate de sodium de la liqueur Lo d'origine avant décomposition A et concentration B, exprimé par le rapport C oxalique g/l/$Na_2O$ g/l étant assez bas, 0,19%, a été relevé à 0,32% par ajout à raison de 20 mg/litre de polyélectrolyte anionique marque FLOERGER AN 934 SH. Après décomposition et concentration par évaporation la liqueur L2 résultante et par suite la fraction L4 de 72 $m^3$ ont la composition suivante :

| | |
|---|---|
| $Na_2O$ caustique g/l | 200 |
| Rp | 0,615 |
| Taux C oxalique/$Na_2O$ | 0,30%. |

Après refroidissement à 60°C, les 72 m3 de liqueur L5 sont mis en contact dans une série de 3 réacteurs en cascade D1, D2, D3 avec la suspension épaissie S7 d'amorce recyclée non lavée représentant environ 50% en poids de la charge d'amorce vierge initiale d'ATC6 soit de l'ordre de 1080 kg de matière sèche ainsi qu'avec 1080 kg d'amorce vierge à base d'ATC6 destinée à compenser exactement la fuite d'amorce polluée.

La suspension résultante S3 constituée par 2x1080 = 2160 kg d'amorce à base d'ATC6 dans 72 $m^3$ de liqueur L5 correspondant à une concentration de 30 g d'amorce par litre, après un temps de séjour total de l'ordre de 30 heures dans les réacteurs en cascade, est décantée F pendant environ 20 heures pour séparer la liqueur surnageante L6 désoxalatée de la souverse épaisse S4 d'amorce polluée. La suspension S7 représentant donc 50% en poids de la charge initiale d'amorce sèche est recyclée comme agent de déstabilisation en tête de procédé, alors que l'autre moitié S5 est filtrée et essorée pour séparer le reliquat d'amorce polluée qui est mis en décharge de la liqueur L9 désoxalatée. Celle-ci, après mélange avec L6, constitue le retour L12 de liqueur désoxalatée dans le circuit de liqueur décomposée. Le retour de liqueur désoxalatée L12, dont le volume est d'environ 70 $m^3$, a un taux C oxalique/$Na_2O$ de 0,22%, ce qui correspond à l'élimination d'environ 14 kg de carbone oxalique équivalent à 78,1 kg d'oxalate de sodium dont la moitié est éliminée à la purge à chaque cycle.

Grâce à un remplacement partiel (50%) de l'amorce polluée par de l'amorce neuve il est possible de limiter la consommation d'amorce à base d'ATC sans réduire significativement l'efficacité de l'amorce puisqu'au bout de 10 cycles de désoxalatation on obtenait encore un taux C oxalique/Na$_2$O caust de 0,23%.

## INTERET DU PROCEDE

Le procédé selon l'invention et tout particulièrement dans sa version de base qui comporte le recyclage intégral de l'amorce après régénération permet d'éliminer efficacement et sélectivement l'oxalate de sodium susceptible de précipiter dans les solutions d'aluminate de sodium du cycle Bayer et cela pratiquement sans consommer d'amorce telle que celle à base d'aluminate tricalcique hexahydraté, c'est-à-dire de chaux et d'alumine.

## Revendications

1. Procédé d'épuration des solutions d'aluminate de sodium résultant de l'attaque alcaline des bauxites selon le procédé Bayer et contenant de l'oxalate de sodium dissous comportant :

   - la précipitation dudit oxalate de sodium dans au moins une fraction de la solution d'aluminate de sodium préalablement décomposée, éventuellement concentrée avant recyclage comme liqueur d'attaque, au moyen d'un agent de déstabilisation de l'état de sursaturation de l'oxalate de sodium, ou amorce de désoxalatation,
   - la séparation de l'oxalate, précipité avec l'agent de déstabilisation sous forme d'un résidu insoluble, et de la solution d'aluminate de sodium épurée qui est alors recyclée comme liqueur d'attaque,

   **caractérisé en ce que** l'agent de déstabilisatien ou amorce de désoxalatation, mis en contact avec la solution d'aluminate de sodium est un sel autre qu'un oxalate, un oxyde métallique, un hydroxyde métallique ou leur mélange, ledit agent de déstabilisation restant essentiellement insoluble et inerte chimiquement vis à vis du milieu réactionnel, et en ce qu'après régénération et mélange avec une aliquote de ladite solution d'aluminate de sodium à épurer, il est recyclé en tant qu'amorce en tête du procédé de désoxalatation.

2. Procédé selon la revendication 1 **caractérisé en ce que** le sel autre qu'un oxalate utilisé comme agent de déstabilisation, est choisi, de préférence dans le groupe des aluminates de calcium.

3. Procédé selon la revendication 2 **caractérisé en ce que** l'aluminate de calcium choisi est l'aluminate tricalcique hexahydraté Al$_2$O$_3$.3Ca0.6H$_2$O ou ATC6.

4. Procédé selon la revendication 1 **caractérisé en ce que** l'oxyde métallique utilisé comme agent de déstabilisation est choisi de préférence dans le groupe des oxydes de fer ou des oxydes d'aluminium.

5. Procédé selon la revendication 4 **caractérisé en ce que** l'oxyde d'aluminium choisi est une alumine calcinée de type alpha ou alpha+béta, une alumine de transition ou les produits intermédiaires formés par le mélange de ces alumines.

6. Procédé selon la revendication 1 **caractérisé en ce que** l'hydroxyde métallique utilisé comme agent de déstabilisation est choisi de préférence dans le groupe des hydroxydes de fer ou des hydroxydes d'aluminium.

7. Procédé selon la revendication 6 **caractérisé en ce que** l'hydroxyde d'aluminium choisi est le trihydroxyde d'aluminium ou trihydrate d'alumine, le monohydrate d'aluminium ou monohydrate d'alumine.

8. Procédé selon la revendication 1 **caractérisé en ce que** la solution d'aluminate de sodium à épurer a une concentration en soude caustique supérieure à 180g Na$_2$O/litre et de préférence comprise entre 190 et 250g Na$_2$O/litre.

9. Procédé selon l'une quelconque des revendications 1 à 8 **caractérisé en ce que** l'amorce, ou agent de déstabilisation, est mise en contact avec la solution d'aluminate de sodium à épurer à une température qui n'excède pas 60°C et de préférence comprise entre 40 et 60°C.

10. Procédé selon l'une quelconque des revendications 1 à 9 **caractérisé en ce que** le temps de mise en contact de l'amorce, ou agent de déstabilisation avec la solution d'aluminate de sodium est d'au moins 1 heure et de préférence compris entre 5 et 40 heures.

11. Procédé selon l'une quelconque des revendications 1 à 10 **caractérisé en ce que** la concentration d'amorce dans la solution d'aluminate de sodium concentrée à épurer est comprise entre 5 et 100g/l et de préférence entre 20 et 40g par litre s'il s'agit d'ATC6.

12. Procédé selon la revendication 11 **caractérisé en ce que** l'amorce à base d'ATC6 est préparée séparément par combinaison de chaux vive avec une aliquote de solution d'aluminate de sodium.

13. Procédé selon la revendicaton 11 **caractérisé en ce que** l'amorce à base d'ATC6 est préparée "in situ" par mise en contact de chaux vive directement dans la fraction de la solution d'aluminate de sodium décomposée et concentrée, destinée à subir le traitement de désoxalatation.

14. Procédé selon la revendication 11 **caractérisé en ce que** l'amorce à base d'ATC6 provient du gâteau insoluble de filtration avant décomposition de la solution sursaturée d'aluminate de sodium issue de décantation.

15. Procédé selon la revendication 14 **caractérisé en ce que** le gâteau insoluble de filtration est constitué d'une part des fines particules de boues rouges et d'autre part d'adjuvant de filtration à base de chaux partiellement transformée en ATC6.

16. Procédé selon la revendication 1 **caractérisé en ce que**, après attaque de bauxite à monohydrate d'alumine contenant peu de matières organiques, on augmente le seuil critique de concentration en oxalate de sodium de la solution d'aluminate de sodium par ajout d'un polyélectrolyte anionique de synthèse.

17. Procédé selon l'une quelconque des revendications 1 à 16 **caractérisé en ce qu'**on sépare par filtration sous pression ou centrifugation le résidu insoluble, formé par l'oxalate de sodium précipité avec l'amorce, de la solution d'aluminate de sodium désoxalatée qui est recyclée au poste d'attaque du procédé Bayer.

18. Procédé selon l'une quelconque des revendications 1 à 17 **caractérisé en ce que** ledit résidu insoluble est soumis à un lavage par brassage, ou patouillage, dans une eau de lavage de PH $\geq$ 6 entre 40°C et 95°C.

19. Procédé selon la revendication 18 **caractérisé en ce que** ladite eau de lavage est de l'eau pure ou une eau de lavage alcaline provenant d'une étape du cycle Bayer pouvant contenir jusqu'à 30 g $Na_2O$/litre.

20. Procédé selon la revendication 19 **caractérisé en ce que** ladite eau de lavage est additionnée d'une petite fraction de l'eau de lavage chargé en oxalate qui est recyclée, l'autre fraction constituant la purge d'oxalate de sodium.

21. Procédé selon l'une quelconque des revendications 1 à 17 **caractérisé en ce que** ledit résidu insoluble est essoré et soumis à une calcination puis à une désagglomération par broyage, avant d'être recyclé comme amorce régénérée en tête de procédé.

22. Procédé selon la revendication 16 **caractérisé en ce que** le résidu insoluble essoré est calciné à plus de 300°C et de préférence entre 400 et 600°C jusqu'à stabilisation de sa perte de poids.

23. Procédé selon l'une quelconque des revendications 1 à 16 **caractérisé en ce qu'**on sépare par décantation le résidu insoluble, formé par l'oxalate de sodium précipité avec l'amorce, de la solution d'aluminate de sodium désoxalatée.

24. Procédé selon la revendication 23 **caractérisé en ce qu'**une fraction importante du résidu insoluble formé par l'amorce polluée d'oxalate de sodium est directement recyclée sous forme de suspension très épaisse comme amorce en tète de procédé.

25. Procédé selon la revendication 23 **caractérisé en ce qu'**une petite fraction du résidu insoluble formé par l'amorce polluée d'oxalate de sodium est filtrée et essorée, pour séparer la liqueur désoxalatée d'imprégnation dudit résidu qui est éliminé en tant que purge d'oxalate de sodium.

**Patentansprüche**

1. Verfahren zur Reinigung von Natriumaluminatlaugen, die beim alkalischen Aufschluss von Bauxit nach dem Bayer-Verfahren entstehen und Natriumoxalat enthalten, umfassend:

- das Ausfällen des Natriumoxalats in mindestens einem Teil der vorweg zersetzten, vor der Rückführung als Aufschlusslösung eventuell konzentrierten Natriumaluminatlauge mit Hilfe eines Mittels zur Destabilisierung des übersättigten Zustands des Natriumoxalats oder Desoxalatationsimpfstoffs,

- das Trennen des mit dem Destabilisierungsmittel als unlöslicher Rückstand ausgefällten Oxalats und der gereinigten Natriumaluminatlauge, die dann als Aufschlusslösung in den Prozess zurückgeführt wird,

**dadurch gekennzeichnet**, dass das mit der Natriumaluminatlauge in Kontakt kommende Destabilisierungsmittel oder der Desoxalatationsimpfstoff ein anderes Salz ist als ein Oxalat, ein Metalloxid, ein Metallhydroxid oder ihr Gemisch, wobei das Destabilisierungsmittel im wesentlichen unlöslich und gegenüber dem Reaktionsmedium chemisch träge bleibt, und dass es nach erfolgter Regenerierung und Mischung mit einem aliquoten Teil der zu reinigenden Natriumaluminatlauge als Impfstoff zur Startphase des Desoxalatationsprozesses zurückgeführt wird.

2. Verfahren nach Anspruch 1, **dadurch gekennzeichnet**, dass das als Destabilisierungsmittel verwendete andere Salz als ein Oxalat vorzugsweise aus der Gruppe der Calciumaluminate gewählt wird.

3. Verfahren nach Anspruch 2, **dadurch gekennzeichnet**, dass das gewählte Calciumaluminat Hexahydrattricalciumaluminat $Al_2O_3.3CaO.6H_2O$ oder ATC6 ist.

4. Verfahren nach Anspruch 1, **dadurch gekennzeichnet**, dass das als Destabilisierungsmittel verwendetete Metalloxid vorzugsweise aus der Gruppe der Eisenoxide oder der Aluminiumoxide gewählt wird.

5. Verfahren nach Anspruch 4, **dadurch gekennzeichnet**, dass das gewählte Aluminiumoxid eine kalzinierte Tonerde vom Typ Alpha oder Alpha+Beta, eine Übergangstonerde oder ein durch die Mischung dieser Tonerden gebildetes Zwischenprodukt ist.

6. Verfahren nach Anspruch 1, **dadurch gekennzeichnet**, dass das als Destabilisierungsmittel verwendete Metallhydroxid vorzugsweise aus der Gruppe der Eisenhydroxide oder der Aluminiumhydroxide gewählt wird.

7. Verfahren nach Anspruch 6, **dadurch gekennzeichnet**, dass das gewählte Aluminiumhydroxid Aluminiumtrihydroxid oder Tonerdetrihydrat, Aluminiummonohydrat oder Tonerdemonohydrat ist.

8. Verfahren nach Anspruch 1, **dadurch gekennzeichnet**, dass die zu reinigende Natriumaluminatlauge eine Konzentration an Natronlauge von mehr als 180 g $Na_2O$/Liter und vorzugsweise 190 bis 250 g $Na_2O$/Liter hat.

9. Verfahren nach einem der Ansprüche 1 bis 8, **dadurch gekennzeichnet**, dass der Impfstoff oder das Destabilisierungsmittel mit der zu reinigenden Natriumaluminatlauge bei einer Temperatur in Kontakt kommt, die 60°C nicht überschreitet und vorzugsweise im Bereich von 40 bis 60°C ist.

10. Verfahren nach einem der Ansprüche 1 bis 9, **dadurch gekennzeichnet**, dass die Zeit, in welcher der Impfstoff oder das Destabilisierungsmittel mit der Natriumaluminatlauge in Kontakt kommt, mindestens 1 Stunde und vorzugsweise 5 bis 40 Stunden beträgt.

11. Verfahren nach einem der Ansprüche 1 bis 10, **dadurch gekennzeichnet**, dass die Impfstoffkonzentration in der zu reinigenden konzentrierten Natriumaluminatlauge im Bereich von 5 bis 100 g/l und vorzugsweise 20 bis 40 g pro Liter ist, wenn es sich um ATC6 handelt.

12. Verfahren nach Anspruch 11, **dadurch gekennzeichnet**, dass der Impfstoff auf ATC6-Basis durch Verbindung von Ätzkalk mit einem aliquoten Teil der Natriumaluminatlauge separat hergestellt wird.

13. Verfahren nach Anspruch 11, **dadurch gekennzeichnet**, dass der Impfstoff auf ATC6-Basis "in situ" hergestellt wird, indem Ätzkalk direkt mit demjenigen Teil der gelösten und konzentrierten Natriumaluminatlauge in Kontakt gebracht wird, welcher der Desoxalatationsbehandlung unterworfen werden soll.

14. Verfahren nach Anspruch 11, **dadurch gekennzeichnet**, dass der Impfstoff auf ATC6-Basis aus dem unlöslichen Filterkuchen vor Zersetzung der durch Sedimentation entstandenen übersättigten Natriumaluminatlösung hervorgeht.

15. Verfahren nach Anspruch 14, **dadurch gekennzeichnet**, dass der unlösliche Filterkuchen zum einen aus feinen Rotschlammteilchen und zum anderen aus einem Filterhilfsstoff auf Basis von teilweise in ATC6 umgewandeltem Kalk besteht.

**16.** Verfahren nach Anspruch 1, **dadurch gekennzeichnet**, dass nach erfolgtem Aufschluss des Bauxits unter Bildung von Tonerdemonohydrat mit geringem Gehalt an organischen Stoffen die kritische Konzentrationsschwelle an Natriumoxalat der Natriumaluminatlauge durch Zugabe eines anionischen Synthesepolyelektrolyten erhöht wird.

**17.** Verfahren nach einem der Ansprüche 1 bis 16, **dadurch gekennzeichnet**, dass der unlösliche Rückstand aus dem mit dem Impfstoff ausgefällten Natriumoxalat durch Druckfiltrieren oder Zentrifugieren von der oxalatfreien Natriumaluminatlauge getrennt wird, welche zur Aufschlussstelle des Bayer-Verfahrens zurückgeführt wird.

**18.** Verfahren nach einem der Ansprüche 1 bis 17, **dadurch gekennzeichnet**, dass der unlösliche Rückstand durch Rühren oder Manschen in Waschwasser mit einem pH-Wert $\geq$ 6 bei 40°C bis 95°C gewaschen wird.

**19.** Verfahren nach Anspruch 18, **dadurch gekennzeichnet**, dass das Waschwasser reines Wasser ist oder ein bei einem Schritt des BayerKreislaufprozesses entstandenes alkalihaltiges Waschwasser, das bis zu 30 g $Na_2O$/Liter enthalten kann.

**20.** Verfahren nach Anspruch 19, **dadurch gekennzeichnet**, dass dem Waschwasser ein kleiner Teil des oxalathaltigen Waschwassers zugeben wird, das zurückgeführt wird, wobei der andere Teil den Natriumoxalatabfluss darstellt.

**21.** Verfahren nach einem der Ansprüche 1 bis 17, **dadurch gekennzeichnet**, dass der unlösliche Rückstand trokkengeschleudert und einer Kalzination und danach einer Zerlegung durch Mahlen unterworfen wird, bevor er als regenerierter Impfstoff zur Startphase des Prozesses zurückgeführt wird.

**22.** Verfahren nach Anspruch 16, **dadurch gekennzeichnet**, dass der trockengeschleuderte unlösliche Rückstand bei mehr als 300°C und vorzugsweise 400 bis 600 °C so lange kalziniert wird, bis sich sein Gewichtsverlust stabilisiert.

**23.** Verfahren nach einem der Ansprüche 1 bis 16, **dadurch gekennzeichnet**, dass der unlösliche Rückstand aus dem mit dem Impfstoff ausgefällten Natriumoxalat durch Sedimentation von der oxalatfreien Natriumaluminatlauge getrennt wird.

**24.** Verfahren nach Anspruch 23, **dadurch gekennzeichnet**, dass ein großer Teil des Rückstands aus dem mit Natriumoxalat verunreinigten Impfstoff in Form einer sehr dickflüssigen Suspension direkt als Impfstoff zur Startphase des Prozesses zurückgeführt wird.

**25.** Verfahren nach Anspruch 23, **dadurch gekennzeichnet**, dass ein kleiner Teil des Rückstands aus dem mit Natriumoxalat verunreinigten Impfstoff filtriert und trockengeschleudert wird, um die oxalatfreie Imprägnierungslösung vom Rückstand zu trennen, welcher Rückstand als Natriumoxalatabfluss eliminiert wird.

## Claims

**1.** Process for purifying sodium aluminate solutions resulting from alkaline attack of bauxites according to the Bayer process and containing dissolved sodium oxalate, comprising:

- precipitation of said sodium oxalate in at least a fraction of the pre-decomposed sodium aluminate solution, possibly concentrated before recycling as the leaching liquor, by means of an agent that destabilizes the supersaturation state of the sodium oxalate, or deoxalation initiator,

- separation of the oxalate, precipitated with destabilizing agent in the form of an insoluble residue, and the purified sodium aluminate solution which is then recycled as the leaching liquor,

**characterized in that** the destabilizing agent or deoxalation initiator, placed in contact with the sodium aluminate solution, is a salt other than an oxalate, a metal oxide, a metal hydroxide or mixture thereof, said destabilizing agent remaining essentially, insoluble and chemically inert with respect to the reaction medium and in that, after regeneration and mixing with an aliquot of said aluminate solution meant to be purified.

2. Process according to Claim 1, **characterized in that** the salt other than an oxalate used as the destabilizing agent is preferably chosen from the calcium aluminate group.

3. Process according to Claim 2, **characterized in that** the calcium aluminate chosen is tricalcium aluminate hexahydrate $Al_2O_3$. $3CaO$. $6H_2O$ or ATC6.

4. Process according to Claim 1, **characterized in that** the metal oxide used as the destabilizing agent is preferably chosen from the group of iron oxides or aluminum oxides.

5. Process according to Claim 4, **characterized in that** the aluminum oxide chosen is a calcined alumina of the alpha or alpha + beta type, a transition alumina, or intermediates formed by mixing these aluminas.

6. Process according to Claim 1, **characterized in that** the metal hydroxide used as the destabilizing agent is preferably chosen from the group of iron hydroxides or aluminum hydroxides.

7. Process according to Claim 6, **characterized in that** the aluminum hydroxide chosen is aluminum trihydroxide or alumina trihydrate, aluminum monohydrate or alumina monohydrate.

8. Process according to Claim 1, **characterized in that** the sodium aluminate solution to be purified has a caustic soda concentration greater than 180 $Na_2O$/liter and preferably between 190 and 250 g $Na_2O$/liter.

9. Process according to any of Claims 1 to 8, **characterized in that** the initiator, or destabilizing agent, is placed in contact with the sodium aluminate solution to be purified at a temperature not above 60°C and preferably between 40 and 60°C.

10. Process according to any of Claims 1 to 9, **characterized in that** the contact time of the initiator or destabilizing agent with the sodium aluminate solution is at least one hour and preferably between 5 and 40 hours.

11. Process according to any of Claims 1 to 10, **characterized in that** the initiator concentration in the concentrated sodium aluminate solution to be purified is between 5 and 100 g/l and preferably between 20 and 40 g/l if it is ATC6.

12. Process according to Claim 11 **characterized in that** the ATC6-based initiator is prepared separately by combination of quicklime with an aliquot of sodium aluminate solution.

13. Process according to Claim 11, **characterized in that** the ATC6-based initiator is prepared in situ by causing quicklime to contact directly the fraction of decomposed, concentrated sodium aluminate solution which is to undergo the deoxalation treatment.

14. Process according to Claim11 **characterized in that** the ATC6-based initiator comes from the insoluble filtration cake before decomposition of the supersaturated sodium aluminate solution coming from decanting.

15. Process according to Claim 14, **characterized in that** the insoluble filtration cake is comprised of red mud fines and of lime-based filtration adjuvant, partially converted into ATC6.

16. Process according to Claim 1, **characterized in that** after attack of the alumina monohydrate bauxite with a low organic-matter content, the critical sodium oxalate concentration threshold of the sodium aluminate solution is increased by adding a synthetic anionic polyelectrolyte.

17. Process according to any of Claims 1 to 16, **characterized in that** the insoluble residue formed by sodium oxalate precipitated with the initiator is of separated by filtration under pressure or centrifugation from the deoxalated sodium aluminate solution which is recycled to the attack station of the Bayer process.

18. Process according to any of Claims 1 to 17, **characterized in that** said insoluble residue is subjected to washing by stirring or splashing action in washing water with a pH ≥ 6 between 40°C and 95°C.

19. Process according to Claim 18, **characterized in that** said washing water is pure water or an alkaline washing water coming from a Bayer cycle step that may contain up to 30 g $Na_2O$ per liter.

20. Process according to Claim 19, **characterized in that** said washing water additionally receives a small fraction of the oxalate-charged washing water which is recycled, the other fraction constituting the sodium oxalate discharge.

21. Process according to any of Claims 1 to 17, **characterized in that** said insoluble residue is dried and subjected to calcination then deagglomeration by crushing before being recycled as a regenerated initiator to the top of the process.

22. Process according to Claim 16, **characterized in that** the insoluble dried residue is calcined at over $300°C$ and preferably between 400 and $600°C$ until its weight loss has stabilized.

23. Process according to any of Claims 1 to 16, **characterized in that** the insoluble residue formed by the sodium oxalate precipitated with the initiator is separated by decanting from the deoxalated sodium aluminate.

24. Process according to Claim 23, **characterized in that** a substantial fraction of the insoluble residue formed by the polluted sodium oxalate initiator is directly recycled in the form of a very thick suspension as an initiator at the top of the process.

25. Process according to Claim 23, **characterized in that** a small fraction of the insoluble residue formed by the polluted sodium oxalate initiator is filtered and dried to separate the deoxalated liquor impregnating said residue, which is eliminated as a sodium oxalate discharge.

Fig. 1

lo

L0

| Décomposition | A |

L1

| Concentration | B |

L2

L4 → | Refroidissement | C

L5

L'5          L"5

S8 → | D1 |  ← S7 ←  | Prémélange | E

S1

| D2 |

S2

| D3 |

S6

H | Désagglomération |

S3

S5

| | S4 → | Calcination | G

F

L6

L3

L7

**Fig. 2**

18

Fig. 3